(19) Europäisches Patentamt / European Patent Office / Office européen des brevets

(11) **EP 2 942 779 B1**

(12) **EUROPEAN PATENT SPECIFICATION**

(45) Date of publication and mention
of the grant of the patent:
**10.11.2021 Bulletin 2021/45**

(21) Application number: **14804456.3**

(22) Date of filing: **25.04.2014**

(51) Int Cl.:
*G11B 27/10* (2006.01)     *G11B 27/34* (2006.01)
*G06F 3/0481* (2013.01)    *G06F 3/0484* (2013.01)

(86) International application number:
**PCT/CN2014/076179**

(87) International publication number:
**WO 2014/190829 (04.12.2014 Gazette 2014/49)**

(54) **MULTI-LEVEL PROGRESS BARS, PROGRESS CONTROL METHOD AND APPARATUS**

MEHRSTUFIGE FORTSCHRITTSBALKEN, VERFAHREN UND VORRICHTUNG ZUR
FORTSCHRITTSKONTROLLE

BARRES DE PROGRESSION MULTINIVEAUX, PROCÉDÉ ET APPAREIL DE COMMANDE DE
PROGRESSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2013 CN 201310214891**

(43) Date of publication of application:
**11.11.2015 Bulletin 2015/46**

(73) Proprietor: **Xiaomi Inc.
Beijing 100085 (CN)**

(72) Inventor: **QIN, Qiuping
Beijing 100085 (CN)**

(74) Representative: **Sadler, Peter Frederick
Reddie & Grose LLP
The White Chapel Building
10 Whitechapel High Street
London E1 8QS (GB)**

(56) References cited:
**EP-A1- 1 942 401      EP-A1- 2 378 402
CN-A- 102 426 841      CN-A- 103 021 439
CN-A- 103 279 352      GB-A- 2 307 383
JP-A- 2006 164 033     US-A1- 2007 250 772
US-A1- 2008 186 808    US-A1- 2009 282 362
US-A1- 2012 306 879**

**Description**

**TECHNICAL FIELD**

The present disclosure generally relates to the field of computer technology, and more particularly, to a multilevel progress bar, methods and devices for progress control.

**BACKGROUND**

With the development of portable terminals, such as smart phones, iPads and other terminals, more and more users are using portable terminals to browse webpages or watch videos. When a user is browsing a webpage or watching a piece of video, he may play fast-forward or play backward the webpage or the video at any time as desired. Since currently display screens of most portable terminals are touch screens, how to effectively control play progress of webpages or video becomes a problem to be solved.

Currently, in most applications, in order to control play progress, a horizontal or a vertical progress bar is provided on a page, and the progress bar indicates the whole play progress of a webpage or a piece of video. There is a button on the progress bar, and a position of the button on the progress bar indicates the progress of the program. By pressing and dragging the button, or by tapping certain position of the progress bar to move the button to the position, control of the play progress of the webpage or the video may be realized.

However, due to the limited sizes of the portable terminals, the sizes of touch screens are limited, and thereby the length of a progress bar is limited by the sizes of the touch screens. Moreover, since a user has to drag a button of a small area on a progress bar of a limited size to adjust progress with his or her finger having a certain width, fine positioning of the play progress is impossible in this situation.

US2008186808 describes an electronic device, such as a mobile terminal, includes a touchscreen display and a control unit for operating responsive to user contact with the display. The control unit is configured to display an analog clock, detect user contact with the display, and adjust displayed position of a selected clock hand of the analog clock responsive to relative locations on the display that the detected user contact occurs.

US2007/250772 describes a time-shift buffer of recorded programming whose time of recording extends between a predetermined lower limit up to the present time is navigated by the user by means of a displayed clock face in selecting a desired program for immediate or deferred playback. Rewinding of hands on the clock face, under user control, causes the minute hand to enter a sector of the clock face representative of a time interval during which incoming programming was recorded. An identifier of the program is displayed in concert with the clock hand positioning, so that the user may at any point in the navigation select the currently-identified program for playback.

EP2378402 describes a slide bar display control device according to the present invention, which includes a display means which indicates a first slide bar including a first slider and a first bar, an input means which can select an arbitrary part of the first slide bar shown on the display means based on touch operation, and a control means which controls the display means and the input means, wherein, when the control means detects that a first operation has been performed in a state that the first slider shown on the display means is being touched in the input means, the display means indicates a second slide bar including a second slider and a second bar, and wherein the second slider is a slider different in a variation amount of a set value per unit moving distance from the first slider.

**SUMMARY**

The invention is defined in the independent claims, to which the reader is now dircctcd. Preferred or advantageous embodiments arc set out in the dependent claims.

**BRIEF DESCRIPTION OF THE DRAWINGS**

A brief introduction will be given hereinafter to the accompany drawings which will be used in the description of the embodiments in order to explain the technical resolutions of the embodiments of the present disclosure more clearly. Apparently, the drawings in the description below are merely for illustrating some embodiments of the present disclosure. Those skilled in the art may obtain other drawings according to these drawings without paying any creative labor.

Fig.1 is an exemplary diagram of an interface of a multilevel annular progress bar provided by a first embodiment of the present disclosure;
Fig.2 is an exemplary diagram of an interface of another multilevel annular progress bar provided by the first embodiment of the present disclosure;

Fig.3 is an exemplary diagram, not part of the invention, of an interface of another multilevel annular progress bar provided by the first embodiment of the present disclosure;

Fig.4 is an exemplary flow chart of a method for progress control provided by a second embodiment of the present disclosure;

Fig.5 is an exemplary flow chart of a method for progress control provided by a third embodiment of the present disclosure;

Fig.6 is an exemplary flow chart of a method for progress control provided by a fourth embodiment of the present disclosure;

Fig.7 is an exemplary flow chart of a method for progress control provided by a fifth embodiment of the present disclosure;

Fig.8 is an exemplary block diagram of a device for progress control provided by a sixth embodiment of the present disclosure;

Fig.9 is an exemplary block diagram of another device for progress control provided by the sixth embodiment of the present disclosure;

Fig.10 is an exemplary block diagram of a device for progress control via a multilevel progress bar provided by a seventh embodiment of the present disclosure; and

Fig.11 is an exemplary block diagram of another device for progress control via a multilevel progress bar provided by the seventh embodiment of the present disclosure

Through the above accompany drawings, the specific embodiments of the present disclosure have been shown, for which a more detailed description will be given as below. These drawings and textual description are not intended to limit the scope of the concept of the present disclosure in any manner, but to explain the concept of the present disclosure to those skilled in the art through particular embodiments.

## DETAILED DESCRIPTION

The features, technical resolutions and advantages of the present disclosure will become more apparent through a further detailed description given hereinafter to embodiments of the disclosure in conjunction with the accompany drawings.

In the embodiments of the present disclosure, a terminal may include a smart phone, a tablet computer, an e-book reader, an MP3 (Moving Picture Experts Group Audio Layer III) player, an MP4 (Moving Picture Experts Group Audio Layer IV) player, a laptop computer, a desktop computer, and the like.

The First Embodiment

An embodiment of the present disclosure provides a multilevel progress bar for progress control, for example, for controlling a play progress of a piece of video. For example, the multilevel progress bar includes at least two levels of progress bars, each of which includes at least a progress slider thereon, the progress slider being configured to adjust a progress of a corresponding progress bar; respective levels of the progress bars correspond to different progress-adjusting functions; each of the progress-adjusting functions is a function representing a relation between a sliding distance of the progress slider and a progress-adjusting value; and the levels of the progress bars move coordinatedly based on respective progress-adjusting values and corresponding progress-adjusting functions.

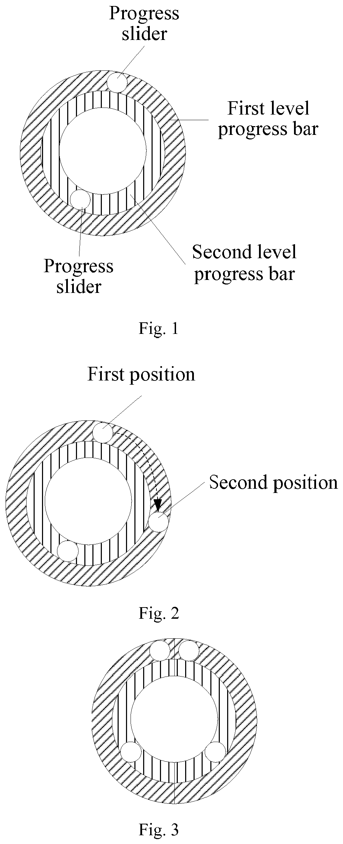

For example, as shown in Fig.1, the multilevel progress bar is a multilevel annular progress bar, including two levels of progress bars. The outer ring is a first level progress bar for realizing a rough adjustment of a play progress, and the inner ring is a second level progress bar for realizing a fine adjustment of the progress. In an embodiment, each level of the progress bar includes a progress slider thereon, and the position of the progress slider indicates the progress of the current application. The progress may be adjusted by dragging the progress slider. As shown in Fig.2, if the progress slider of the first level progress bar is dragged from a first position to a second position, the progress accordingly advances fast-forward from a progression corresponding to the first position to a progression corresponding to the second position. The two levels of progress bars move coordinatedly, i.e., when moving of the progress slider on one of the progress bars is triggered, the progress slider on the other one of the progress bars will move accordingly. The coordinated movement relationship is related to respective progress-adjusting function corresponding to each level of progress bar.

In order to make those skilled in the art better understand the coordinated movement of the multi-levels of progress bars provided by the present disclosure, the present embodiment will be described taking the multilevel annual progress bar as shown in Fig.1 as an example.

It is assumed that a total play time of a video file is 120 minutes, one complete trip around the first level progress bar is worth 120 minutes, and one complete trip around the second level progress bar is worth 5 minutes. The progress-adjusting function of the first level progress bar is:

$$120*\Delta x / (2 * \pi) \hspace{6cm} 1)$$

where $\Delta x$ is a rotation angle of the progress slider of the first level progress bar. The progress-adjusting function of the second level of progress bar is:

$$5*\Delta y/ (2 *\pi) \hspace{6cm} 2)$$

Where $\Delta y$ is a rotation angle of the progress slider of the second level progress bar. In this case, when sliding of the progress slider of the first level progress bar is triggered, if the sliding angle corresponding to the first level progress slider is $\Delta a$, then the progress-adjusting value is obtained as $120*\Delta a/(2*\pi)$ by putting $\Delta a$ into equation 1). The sliding angle of the progress slider the second level progress bar is calculated as $\Delta y=24*\Delta a$ according to the progress-adjusting value and equation 2). Then, the progress slider of the second level progress bar slides according to this angle.

However, in the present embodiment, the number of the progress sliders on each level of progress bar is not limited, and two progress sliders may be included, in which the first slider realizes fast-forward playing of the progress, and the second slider realizes backward playing of the progress. This is not limited by the present embodiment. In an aspect, shown in Fig.3, which is not part of the invention, the annular progress bar is a semi-closed progress bar, the outer ring is the first level progress bar and the inner ring is the second level progress bar. Each of the outer ring and the inner ring is divided into a left part and a right part, and the left part and the right part respectively have a corresponding progress slider. When the progress slider of the left part slides from top to bottom along an annular trajectory of the left part, the play progress is controlled to be fast-forward. When the progress slider of the right part slides from top to bottom along an annular trajectory of the right part, the play progress is controlled to be backward. When the progress slider of the left part slides to the bottom of the ring, and then slides from bottom to top along the annual trajectory of the left part, the play progress is in turn controlled to be backward. When the progress slider of the right part slides to the bottom of the ring, and then slides from bottom to top along the annual trajectory of the right part, the play progress is in turn controlled to be fast-forward.

As can be seen from the above example that, each progress bar of the multilevel progress bar has an independent progress-adjusting function. The progress-adjusting function is a function representing a relation between a sliding distance of the progress slider and a progress-adjusting value. When a progress slider on one of the progress bars slides to change a progress of an application, a corresponding progress-adjusting value may be calculated according to a progress-adjusting function of the triggered progress bar. In turn, the sliding distance of each progress slider may be inversely calculated according to the calculated progress-adjusting value and the progress-adjusting function of the other progress bar. Thereby, coordinated movement of respective levels of progress bars may be realized based on respective progress-adjusting values and corresponding progress-adjusting functions.

In an embodiment, the relation between the sliding distance of the progress slider and the progress-adjusting value is linear. That is, the sliding distance is adjusted in proportion to the progress-adjusting value.

In another embodiment, the multilevel progress bar includes a closed multilevel progress bar or a non-closed multilevel progress bar. The closed multilevel progress bar refers to a progress bar with a loop structure in which there is no starting point and finishing point. The non-closed multilevel progress bar refers to a progress bar in which there is a starting point and a finishing point.

In another embodiment, the closed multilevel progress bar includes but not limited to: a multilevel annular progress bar, a multilevel rectangular progress bar or a multilevel triangular progress bar, and the like. The multilevel annular progress bar is a multilevel progress bar in which each progress bar is of an annular structure. The multilevel rectangular progress bar is a multilevel progress bar in which each progress bar is of a rectangular structure. The multilevel triangular progress bar is a multilevel progress bar in which each progress bar is of a triangular structure. Since the closed multilevel progress bar has a loop structure, such progress bar may be used in a screen of a limited size to enable a loop adjustment. Thereby, a larger moving distance may be achieved to enable more accurate positioning of the progress slider.

It should be noted that, as the multilevel progress bar includes a closed multilevel progress bar, each level of closed multilevel progress bar corresponds to a progress less than or equal to a total progress. For example, when the multilevel progress bar is an annular progress bar as shown in Fig.1, the first level progress bar does correspond to a play progress of the total play progress of the whole application. For example, if the application is a video file with a total play time of 120 minutes, one complete trip around the first level progress bar is worth 120 minutes, and one complete trip around the second level progress bar is worth 5 minutes, and thus one complete trip around the first level progress bar equals to twenty four complete trips around the second level progress bar. In one aspect, not part of the invention, the first level progress bars may also correspond to a play progress being part of the play progress of the whole application.

For example, one complete trip around the first level progress bar is worth 60 minutes, and thus completion of the whole video needs two complete trips around the first level progress bar.

In another aspect, not part of the invention, the non-closed multilevel progress bar includes but not limited to: a multilevel strip-type progress bar or a multilevel curved progress bar, and the like.

In another embodiment, a progress adjustment performed by the progress slider on a corresponding progress bar in the multilevel progress bar includes but not limited to: a smooth adjustment or a discrete adjustment, and the like. The discrete adjustment refers to the progress slider moving step by step according to a preset progress space, rather than moving smoothly on the progress bar. For example, each of the first level progress bar and the second level progress bar consists of ten progress spaces, and each time the second level progress bar moves ten progress spaces, the first level progress bar moves one progress space.

The present embodiment may have the following advantageous effects: the multilevel progress bar includes at least two levels of progress bars, and each level of progress bar corresponds to a different progress-adjusting function; thereby, a user may select different levels of progress bars to adjust the progress as desired so as to enable a fine adjustment of the progress; thus, the present embodiment may solve the problem in the related arts that positioning of the play progress is inaccurate, and that an inadvertent operation or inaccurate positioning may often occur when a user operates a progress bar with his or her finger; consequently, the present embodiment provides a larger, longer or wider space for a user to operate such that the user may quickly perform adjusting operation of the play progress, thereby saving power consumption of the battery and prolonging running time of the terminals.

The Second Embodiment

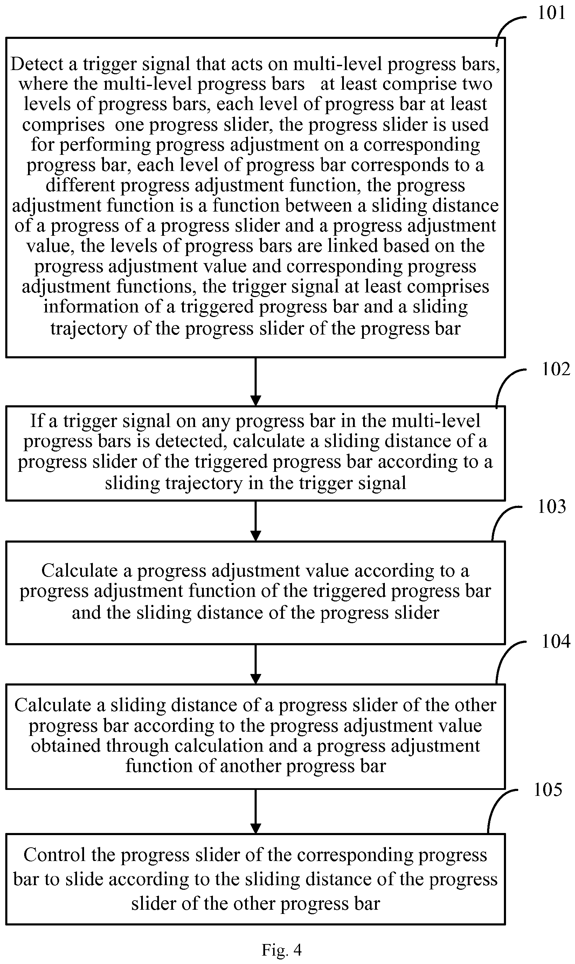

Referring to Fig.4, a method for coordinated control of a multilevel progress bar is provided in the present embodiment. The method includes the following steps.

In step 101, a trigger signal acting upon a multilevel progress bar is detected. The multilevel progress bar includes at least two levels of progress bars, each of which includes at least a progress slider thereon, the progress slider being configured to adjust a progress of a corresponding progress bar; respective levels of the progress bars correspond to different progress-adjusting functions; each of the progress-adjusting functions is a function representing a relation between a sliding distance of the progress slider and a progress-adjusting value; and the levels of the progress bars move coordinately based on respective progress-adjusting values and corresponding progress-adjusting functions; and the trigger signal including at least information on the triggered progress bar and a sliding trajectory of the progress slider of the triggered progress bar.

In step 102, if a trigger signal upon any progress bar of the multilevel progress bar is dctcctcd, a sliding distance of the progress slider of the triggered progress bar is calculated according to the sliding trajectory in the trigger signal.

In step 103, a progress-adjusting value is calculated according to a progress-adjusting function of the triggered progress bar and the sliding distance of the progress slider.

In step 104, a sliding distance of a progress slider of an other progress bar is calculated according to the calculated progress-adjusting value and a progress-adjusting function of the other progress bar.

In step 105, sliding of the progress slider of the other progress bar is controlled according to the sliding distance of the progress slider of the other progress bar.

For example, as shown in Fig.1, the multilevel progress bar is a multilevel annular progress bar, including two levels of progress bars. The outer ring is a first level progress bar for realizing a rough adjustment of a play progress, and the inner ring is a second level progress bar for realizing a fine adjustment of the progress. In an embodiment, each level of the progress bar includes a progress slider thereon, and the position of the progress slider indicates the progress of the current application. The progress may be adjusted by dragging the progress slider. As shown in Fig.2, if the progress slider of the first level progress bar is dragged from a first position to a second position, the progress accordingly advances fast-forward from a progression corresponding to the first position to a progression corresponding to the second position. The two levels of progress bars move coordinatedly, i.e., when moving of the progress slider on one of the progress bars is triggered, the progress slider on the other one of the progress bars will move accordingly. The coordinated movement relationship is related to respective progress-adjusting function corresponding to each level of progress bar.

However, in the present embodiment, the number of the progress sliders on each level of progress bar is not limited, and two progress sliders may be included, in which the first slider realizes fast-forward playing of the progress, and the second slider realizes backward playing of the progress. This is not limited by the present embodiment. In an aspect, shown in Fig. 3, which is not part of the invention, the annular progress bar is a semi-closed progress bar, the outer ring is the first level progress bar and the inner ring is the second level progress bar. Each of the outer ring and the inner ring is divided into a left part and a right part, and the left part and the right part respectively have a corresponding progress slider. When the progress slider of the left part slides from top to bottom along an annular trajectory of the left part, the play progress is controlled to be fast-forward. When the progress slider of the right part slides from top to bottom along an annular trajectory of the right part, the play progress is controlled to be backward. When the progress slider of the left part slides to the bottom of the ring, and then slides from bottom to top along the annual trajectory of the left part, the play progress is in turn controlled to be backward. When the progress slider of the right part slides to the bottom of the ring, and then slides from bottom to top along the annual trajectory of the right part, the play progress is in turn controlled to be fast-forward.

In an embodiment, the relation between the sliding distance of the progress slider and the progress-adjusting value is linear.

In all embodiments, the multilevel progress bar includes a closed multilevel progress bar. The closed multilevel progress bar refers to a progress bar with a loop structure in which there is no starting point and finishing point.

In another embodiment, the closed multilevel progress bar includes but not limited to: a multilevel annular progress bar, a multilevel rectangular progress bar or a multilevel triangular progress bar, and the like. The multilevel annular progress bar is a multilevel progress bar in which each progress bar is of an annular structure. The multilevel rectangular progress bar is a multilevel progress bar in which each progress bar is of a rectangular structure. The multilevel triangular progress bar is a multilevel progress bar in which each progress bar is of a triangular structure. Since the closed multilevel progress bar has a loop structure, such progress bar may be used in a screen of a limited size to enable a loop adjustment. Thereby, a larger moving distance may be achieved to enable more accurate positioning of the progress slider.

It should be noted that, as the multilevel progress bar includes a closed multilevel progress bar, each level of closed multilevel progress bar corresponds to a progress less than or equal to a total progress. For example, when the multilevel progress bar is an annular progress bar as shown in Fig.1, the first level progress bar does correspond to a play progress of the total play progress of the whole application. For example, if the application is a video file with a total play time of 120 minutes, one complete trip around the first level progress bar is worth 120 minutes, and one complete trip around the second level progress bar is worth 5 minutes, and thus one complete trip around the first level progress bar equals to twenty four complete trips around the second level progress bar.

In another embodiment, a progress adjustment performed by the progress slider on a corresponding progress bar in the multilevel progress bar includes but not limited to: a smooth adjustment or a discrete adjustment, and the like. The discrete adjustment refers to the progress slider moving step by step according to a preset progress space, rather than moving smoothly on the progress bar. For example, each of the first level progress bar and the second level progress bar consists of ten progress spaces, and each time the second level progress bar moves ten progress spaces, the first level progress bar moves one progress space.

The present embodiment may have the following advantageous effects: the multilevel progress bar includes at least two levels of progress bars, and each level of progress bar corresponds to a different progress-adjusting function; thereby, a user may select different levels of progress bars to adjust the progress as desired so as to enable a fine adjustment of the progress; thus, the present embodiment may solve the problem in the related arts that positioning of the play progress is inaccurate, and that an inadvertent operation or inaccurate positioning may often occur when a user operates a progress bar with his or her finger; consequently, the present embodiment provides a larger, longer or wider space for a user to operate such that the user may quickly perform adjusting operation of the play progress, thereby saving power consumption of the battery and prolonging running time of the terminals.

The Third Embodiment

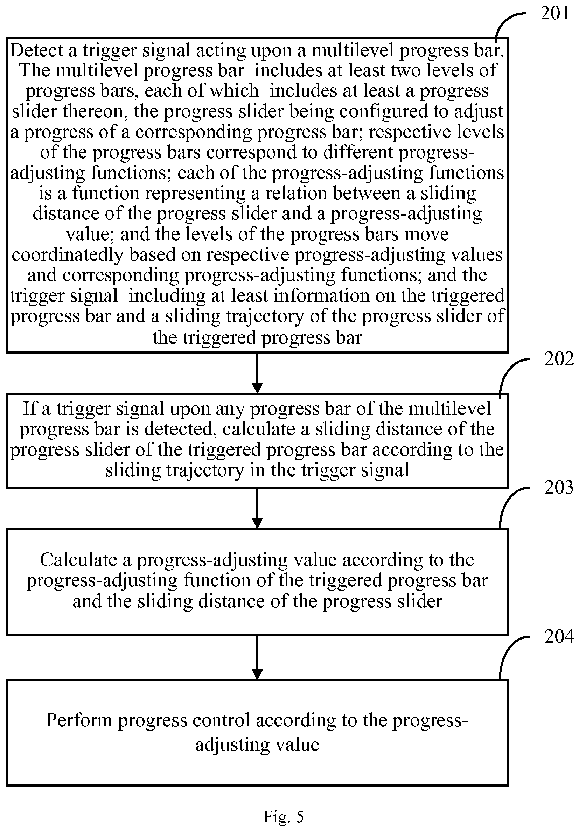

Referring to Fig.5, a method for controlling a progress via a multilevel progress bar is provided in the embodiment of the present disclosure. The method includes the following steps.

In step 201, a trigger signal acting upon a multilevel progress bar is detected. The multilevel progress bar includes at least two levels of progress bars, each of which includes at least a progress slider thereon, the progress slider being configured to adjust a progress of a corresponding progress bar; respective levels of the progress bars correspond to different progress-adjusting functions; each of the progress-adjusting functions is a function representing a relation between a sliding distance of the progress slider and a progress-adjusting value; and the levels of the progress bars move coordinately based on respective progress-adjusting values and corresponding progress-adjusting functions; and the trigger signal including at least information on the triggered progress bar and a sliding trajectory of the progress slider of the triggered progress bar.

In step 202, if a trigger signal upon any progress bar of the multilevel progress bar is detected, a sliding distance of the progress slider of the triggered progress bar is calculated according to the sliding trajectory in the trigger signal.

In step 203, a progress-adjusting value is calculated according to a progress-adjusting function of the triggered progress bar and the sliding distance of the progress slider.

In step 204, the progress is controlled according to the progress-adjusting value.

For example, as shown in Fig.1, the multilevel progress bar is a multilevel annular progress bar, including two levels of progress bars. The outer ring is a first level progress bar for realizing a rough adjustment of a play progress, and the inner ring is a second level progress bar for realizing a fine adjustment of the progress. In an embodiment, each level of the progress bar includes a progress slider thereon, and the position of the progress slider indicates the progress of the current application. The progress may be adjusted by dragging the progress slider. As shown in Fig.2, if the progress slider of the first level progress bar is dragged from a first position to a second position, the progress accordingly advances fast-forward from a progression corresponding to the first position to a progression corresponding to the second position. The two levels of progress bars move coordinatedly, i.e., when moving of the progress slider on one of the progress bars is triggered, the progress slider on the other one of the progress bars will move accordingly. The coordinated movement relationship is related to respective progress-adjusting function corresponding to each level of progress bar.

However, in the present embodiment, the number of the progress sliders on each level of progress bar is not limited, and two progress sliders may be included, in which the first slider realizes fast-forward playing of the progress, and the second slider realizes backward playing of the progress. This is not limited by the present embodiment. In an aspect, illustrated in Fig.3,which is not part of the invention,
the annular progress bar is a semi-closed progress bar, the outer ring is the first level progress bar and the inner ring is the second level progress bar. Each of the outer ring and the inner ring is divided into a left part and a right part, and the left part and the right part respectively have a corresponding progress slider. When the progress slider of the left part slides from top to bottom along an annular trajectory of the left part, the play progress is controlled to be fast-forward. When the progress slider of the right part slides from top to bottom along an annular trajectory of the right part, the play progress is controlled to be backward. When the progress slider of the left part slides to the bottom of the ring, and then slides from bottom to top along the annual trajectory of the left part, the play progress is in turn controlled to be backward. When the progress slider of the right part slides to the bottom of the ring, and then slides from bottom to top along the annual trajectory of the right part, the play progress is in turn controlled to be fast-forward.

In an embodiment, the relation between the sliding distance of the progress slider and the progress-adjusting value is linear.

In all embodiments, the multilevel progress bar includes a closed multilevel progress bar. The closed multilevel progress bar refers to a progress bar with a loop structure in which there is no starting point and finishing point.

In another embodiment, the closed multilevel progress bar includes but not limited to: a multilevel annular progress bar, a multilevel rectangular progress bar or a multilevel triangular progress bar, and the like. The multilevel annular progress bar is a multilevel progress bar in which each progress bar is of an annular structure. The multilevel rectangular progress bar is a multilevel progress bar in which each progress bar is of a rectangular structure. The multilevel triangular progress bar is a multilevel progress bar in which each progress bar is of a triangular structure. Since the closed multilevel progress bar has a loop structure, such progress bar may be used in a screen of a limited size to enable a loop adjustment. Thereby, a larger moving distance may be achieved to enable more accurate positioning of the progress slider.

It should be noted that, as the multilevel progress bar includes a closed multilevel progress bar, each level of closed multilevel progress bar corresponds to a progress less than or equal to a total progress. For example, when the multilevel progress bar is an annular progress bar as shown in Fig.1, the first level progress bar does correspond to a play progress of the total play progress of the whole application. For example, if the application is a video file with a total play time of 120 minutes, one complete trip around the first level progress bar is worth 120 minutes, and one complete trip around the second level progress bar is worth 5 minutes, and thus one complete trip around the first level progress bar equals to twenty four complete trips around the second level progress bar.

In another embodiment, a progress adjustment performed by the progress slider on a corresponding progress bar in the multilevel progress bar includes but not limited to: a smooth adjustment or a discrete adjustment, and the like. The discrete adjustment refers to the progress slider moving step by step according to a preset progress space, rather than moving smoothly on the progress bar. For example, each of the first level progress bar and the second level progress bar consists of ten progress spaces, and each time the second level progress bar moves ten progress spaces, the first level progress bar moves one progress space.

The present embodiment may have the following advantageous effects: the multilevel progress bar includes at least two levels of progress bars, and each level of progress bar corresponds to a different progress-adjusting function; thereby, a user may select different levels of progress bars to adjust the progress as desired so as to enable a fine adjustment of the progress; thus, the present embodiment may solve the problem in the related arts that positioning of the play progress is inaccurate, and that an inadvertent operation or inaccurate positioning may often occur when a user operates a progress bar with his or her finger; consequently, the present embodiment provides a larger, longer or wider space for a user to operate such that the user may quickly perform adjusting operation of the play progress, thereby saving power consumption of the battery and prolonging running time of the terminals.

The Fourth Embodiment

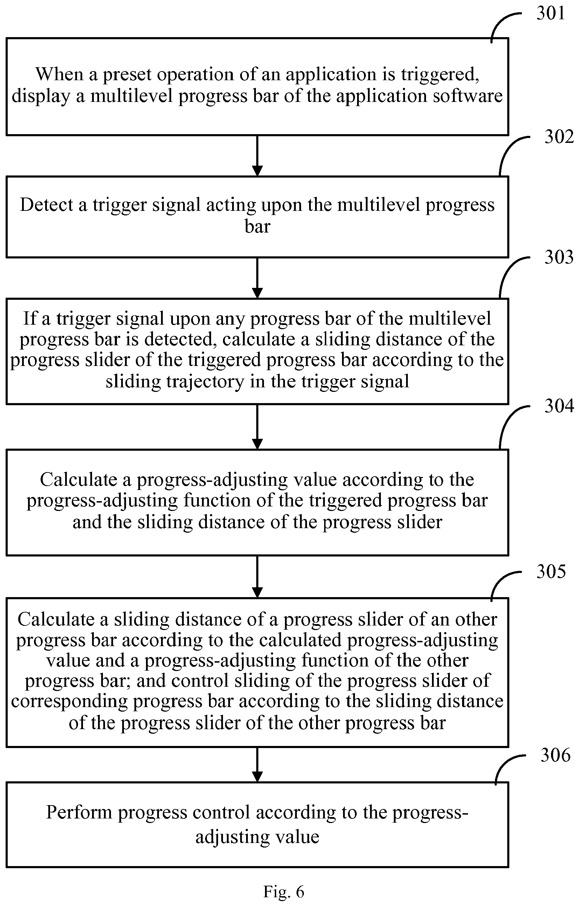

A method for coordinated control of a multilevel progress bar is provided in the embodiment of the present embodiment. The fourth embodiment is a detailed explanation of the second embodiment. Referring to Fig.6, the method includes the following steps.

In step 301, when a preset operation of an application is triggered, a multilevel progress bar of the application is displayed.

In the present embodiment, the application includes but not limited to: a browser, video player software and the like. The preset operation includes but not limited to: an operation of starting of the application or an operation of triggering a functional module in the application. For example, if a film link is triggered in a video player, the terminal will load the file of the film, and displays a multilevel progress bar in the playing interface.

Similar to the above described, the multilevel progress bar in the present embodiment includes at least two levels of progress bars, each of which includes at least a progress slider thereon, the progress slider being configured to adjust a progress of a corresponding progress bar; respective levels of the progress bars correspond to different progress-adjusting functions; each of the progress-adjusting functions is a function representing a relation between a sliding distance of the progress slider and a progress-adjusting value; and the levels of the progress bars move coordinately based on respective progress-adjusting values and corresponding progress-adjusting functions; and the trigger signal including at least information on the triggered progress bar and a sliding trajectory of the progress slider of the triggered progress bar.

Similar to the first embodiment, in the present embodiment, the type of multilevel progress bar includes a closed multilevel progress bar. Optionally, the closed multilevel progress bar includes but not limited to: a multilevel annular progress bar, a multilevel rectangular progress bar or a multilevel triangular progress bar, and the like. Optionally, a hiding function may be provided for the multilevel progress bar, and when the multilevel progress bar is needed, displaying of the multilevel progress bar may be triggered, and when the multilevel progress bar is not needed, the multilevel progress bar may be hidden. Moreover, in order to facilitate control of the multilevel progress bar by a user, a zoom-in and a zoom-out function may be optionally provided for the multilevel progress bar to allow the user to adjust the multilevel progress bar more flexibly.

In the present step, the multilevel progress bar includes at least two levels of progress bars. A coordinated relation exists among the levels of progress bars, and each level of progress bar corresponds to a different adjusting value of the play progress of the application. For example, as shown in Fig.1, the multilevel progress bar is an annular progress bar, including two levels of progress bars. The outer ring is a first level progress bar for realizing a rough adjustment of a play progress, and the inner ring is a second level progress bar for realizing a fine adjustment of the progress. In an embodiment, each level of the progress bar includes a progress slider thereon, and the position of the progress slider indicates the progress of the current application. The progress may be adjusted by dragging the progress slider. As shown in Fig.2, if the progress slider of the first level progress bar is dragged from a first position to a second position, the progress accordingly advances fast-forward from a progression corresponding to the first position to a progression corresponding to the second position.

In step 302, a trigger signal acting upon the multilevel progress bar is detected.

Optionally, the trigger signal includes but not limited to: a trigger signal acting upon a progress slider of each level of progress bar; or a trigger signal acting upon any position on each level of progress bar. As shown in Fig.2, the trigger signal may be a trigger signal of dragging the progress slider on the first level progress bar from the first position to the second position by a user, or may be a trigger signal when the user taps the second position on the first level progress bar. At this point, after the terminal detects the trigger signal, it will slide the progress bar to the second position. The trigger signal includes at least information on the triggered progress bar and a sliding trajectory of the progress slider of the progress bar.

In step 303, if a trigger signal upon any progress bar of the multilevel progress bar is detected, a sliding distance of the progress slider of the triggered progress bar is calculated according to the sliding trajectory in the trigger signal.

In the present step, after the trigger signal upon any progress bar of the multilevel progress bar is detected, for example, after the trigger signal upon the first level progress bar as shown in Fig.1 is detected, the sliding distance of the progress slider of the triggered progress bar is calculated according to the starting point and the finishing point of the sliding trajectory of the progress slider on triggered the progress bar. The calculation of the sliding distance is similar to the calculation method known in the related arts, and thereby is not described in detail in the present embodiment.

In step 304, a progress-adjusting value is calculated according to a progress-adjusting function of the triggered progress bar and the sliding distance of the progress slider.

In the present embodiment, various types of multilevel progress bars may be stored in advance in application software. Thus, a user may change a current multilevel progress bar of the application at any time according to his or her preference. For example, the user may replace the current annular progress bar with a triangular progress bar. Therefore, in an embodiment, when the progress-adjusting value is calculated, the type of the current multilevel progress bar is determined firstly, and the progress-adjusting function of each progress bar is acquired according to the corresponding type. Next, the progress-adjusting value is calculated according to the sliding distance of the progress slider and the corresponding progress-adjusting function of the triggered progress bar.

In step 305, a sliding distance of a progress slider of an other progress bar is calculated according to the calculated progress-adjusting value and a progress-adjusting function of the other progress bar; and sliding of the progress slider of the corresponding progress bar is controlled according to the sliding distance of the progress slider of the other progress bar.

In the present embodiment, multi-levels of progress bars move coordinately. When a progress slider of one level of progress bar is triggered, other progress slider(s) will slide accordingly. In an embodiment, the sliding distance of the progress slider of the other progress bar is calculated according to the calculated progress-adjusting value and the progress-adjusting function of the other progress bar; the sliding trajectory of the other progress bar is calculated according to the sliding distance of the progress slider of the other progress bar; and then sliding of the progress slider is controlled according to the corresponding sliding trajectory. As shown in Fig.2, when it is detected that the progress slider of the first level progress bar slides from the first position to the second position, the sliding distance of the progress slider of the first level of progress bar is acquired. The progress-adjusting value is calculated according to the sliding distance and the progress-adjusting function of the first level progress bar. The sliding distance of the progress slider of the second level progress bar is calculated according to the progress-adjusting value and the progress-adjusting function of the second level progress bar. The sliding trajectory of the slider on the second level progress bar is calculated according to the sliding distance of the second level of progress bar, and the progress slider of the second level of progress bar is driven to slide according to the sliding trajectory.

In the present embodiment, a progress adjustment performed by the progress slider on a corresponding progress bar in the multilevel progress bar includes but not limited to: a smooth adjustment or a discrete adjustment, and the like. The discrete adjustment refers to the progress slider moving step by step according to a preset progress space, rather than moving smoothly on the progress bar. For example, each of the first level progress bar and the second level progress bar consists of ten progress spaces, and each time the second level progress bar moves ten progress spaces, the first level progress bar moves one progress space.

In step 306, the progress is controlled according to the progress-adjusting value.

For detailed process of controlling the progress according to the progress-adjusting value, refer to the fifth embodiment, and thus detailed description is not provided in the present embodiment.

The present embodiment may have the following advantageous effects: the multilevel progress bar includes at least two levels of progress bars, and each level of progress bar corresponds to a different progress-adjusting function; thereby, a user may select different levels of progress bars to adjust the progress as desired so as to enable a fine adjustment of the progress; thus, the present embodiment may solve the problem in the related arts that positioning of the play progress is inaccurate, and that an inadvertent operation or inaccurate positioning may often occur when a user operates a progress bar with his or her finger; consequently, the present embodiment provides a larger, longer or wider space for a user to operate such that the user may quickly perform adjusting operation of the play progress, thereby saving power consumption of the battery and prolonging running time of the terminals.

The Fifth Embodiment

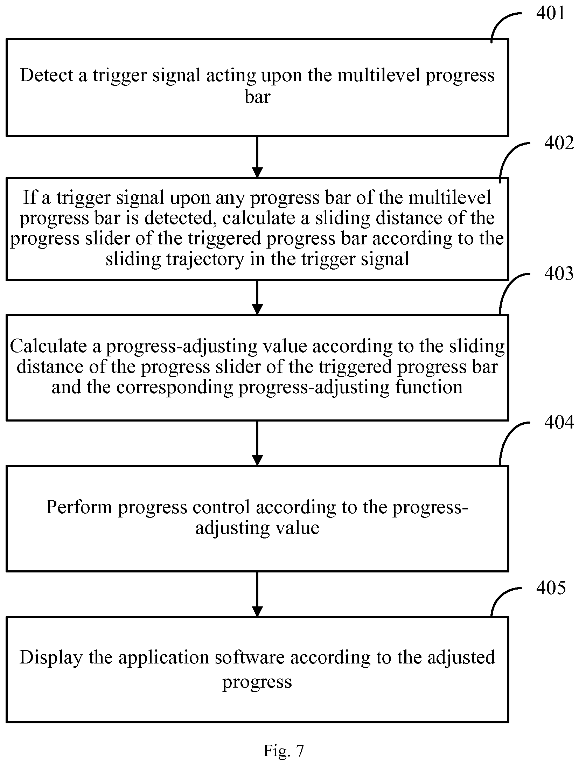

A method for controlling a progress via a multilevel progress bar is provided in the embodiment of the present embodiment. The fifth embodiment is a detailed explanation of the third embodiment. Referring to Fig.7, the method includes the following steps.

In step 401, a trigger signal acting upon a multilevel progress bar is detected.

In the present embodiment, in execution of application software, for example in the process of browsing a webpage or playing a piece of video, a terminal detects a trigger signal acting upon a multilevel progress bar. The trigger signal includes but not limited to: a trigger signal acting upon a progress slider of each level of progress bar; or a trigger signal acting upon any position on each level of progress bar. This is not limited by the present embodiment. The trigger signal includes at least information on the triggered progress bar and a sliding trajectory of the progress slider of the progress bar.

Similar to the above described, the multilevel progress bar in the present embodiment includes at least two levels of progress bars, each of which includes at least a progress slider thereon, the progress slider being configured to adjust a progress of a corresponding progress bar; respective levels of the progress bars correspond to different progress-adjusting functions; each of the progress-adjusting functions is a function representing a relation between a sliding distance of the progress slider and a progress-adjusting value; and the levels of the progress bars move coordinately based on respective progress-adjusting values and corresponding progress-adjusting functions; and the trigger signal including at least information on the triggered progress bar and a sliding trajectory of the progress slider of the triggered progress bar.

In step 402, if a trigger signal upon any progress bar of the multilevel progress bar is detected, a sliding distance of the progress slider of the triggered progress bar is calculated according to the sliding trajectory in the trigger signal.

In the present step, after a trigger signal upon any progress bar of the multilevel progress bar is detected, for example, after a trigger signal upon the first level progress bar as shown in Fig.1 is detected, a sliding distance of the progress slider of the triggered progress bar is calculated according to the starting point and the finishing point of the sliding trajectory of the progress slider of the progress bar. The calculation of the sliding distance is similar to the calculation method known in the related arts, and thus detailed description is omitted in the present embodiment.

In step 403, a progress-adjusting value is calculated according to the sliding distance of the progress slider of the triggered progress bar and the corresponding progress-adjusting function of the triggered progress bar.

In the present embodiment, various types of multilevel progress bars may be stored in advance in application software. Thus, a user may change a current multilevel progress bar of the application at any time according to his or her preference. For example, the user may replace the current annular progress bar with a triangular progress bar. Therefore, in an embodiment, when the progress-adjusting value is calculated, the type of the current multilevel progress bar is determined firstly, and the progress-adjusting function of each progress bar is acquired according to the corresponding type. Next, the progress-adjusting value is calculated according to the sliding distance of the progress slider and the corresponding progress-adjusting function of the triggered progress bar.

In step 404, the progress is controlled according to the progress-adjusting value.

In the present step, after the progress-adjusting value is acquired, the progress is controlled. For example, if the adjusting value for the playing of the video is 5 minutes, a video stream of five minutes later is drawn from the video as the current play progress. Here, the adjustment to the play progress according to the adjusting value is similar to what is known in the related arts, and thus detailed description is omitted in the present embodiment.

In step 405, the application software is played according to the adjusted progress.

After the terminal acquires the adjusted play progress, the application software is continued to be played according to the adjusted play progress. Here, the implementation is similar to what is known in the related arts, and thus detailed description is omitted in the present embodiment.

The present embodiment may have the following advantageous effects: the multilevel progress bar includes at least two levels of progress bars, and each level of progress bar corresponds to a different progress-adjusting function; thereby, a user may select different levels of progress bars to adjust the progress as desired so as to enable a fine adjustment of the progress; thus, the present embodiment may solve the problem in the related arts that positioning of the play progress is inaccurate, and that an inadvertent operation or inaccurate positioning may often occur when a user operates a progress bar with his or her finger; consequently, the present embodiment provides a larger, longer or wider space for a user to operate such that the user may quickly perform adjusting operation of the play progress, thereby saving power consumption of the battery and prolonging running time of the terminals.

The Sixth Embodiment

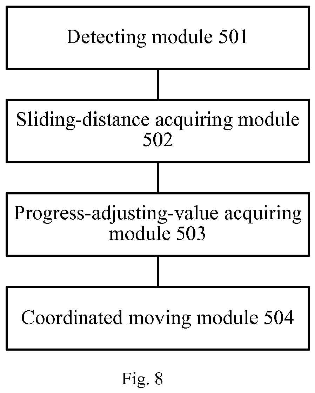

Referring to Fig.8, a device for progress control is provided by the embodiments of the present disclosure, including: a detecting module 501, a sliding-distance acquiring module 502, a progress-adjusting-value acquiring module 503 and a coordinated moving module 504.

The detecting module 501 is configured to detect a trigger signal acting upon the multilevel progress bar. The multilevel progress bar includes at least two levels of progress bars, each of which includes at least a progress slider thereon, the progress slider being configured to adjust a progress of a corresponding progress bar; respective levels of the progress bars correspond to different progress-adjusting functions; each of the progress-adjusting functions is a function representing a relation between a sliding distance of the progress slider and a progress-adjusting value; and the levels of the progress bars move coordinately based on respective progress-adjusting values and corresponding progress-adjusting functions; and the trigger signal including at least information on the triggered progress bar and a sliding trajectory of the progress slider of the triggered progress bar.

The sliding-distance acquiring module 502 is configured to, if a trigger signal upon any progress bar of the multilevel progress bar is detected, calculate a sliding distance of the progress slider of the triggered progress bar according to the sliding trajectory in the trigger signal.

The progress-adjusting-value acquiring module 503 is configured to calculate a progress-adjusting value according to the progress-adjusting function of the triggered progress bar and the sliding distance of the progress slider.

The sliding-distance acquiring module 502 is further configured to calculate a sliding distance of a progress slider of an other progress bar according to the calculated progress-adjusting value and a progress-adjusting function of the other progress bar.

The coordinated moving module 504 is configured to control sliding of the progress slider of the other progress bar according to the sliding distance of the progress slider of the other progress bar.

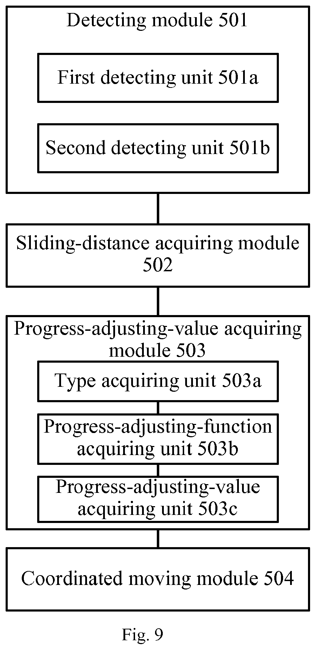

In another embodiment, referring to Fig.9, the detecting module 501 includes:

a first detecting unit 501a configured to detect a trigger signal acting upon a progress slider of each level of the progress bar; or

a second detecting unit 501b configured to detect a trigger signal acting upon any position on each level of the progress bar.

In another embodiment, referring to Fig.9, the progress-adjusting-value acquiring module 503 includes:

a type acquiring unit 503a configured to determine a type of the multilevel progress bar;

a progress-adjusting-function acquiring unit 503b configured to acquire a progress-adjusting function of each level of progress bar according to the type of the multilevel progress bar; and

a progress-adjusting-value acquiring unit 503c configured to calculate the progress-adjusting value according to the progress-adjusting function of the triggered progress bar and the sliding distance of the progress slider.

In another embodiment, the relation between the sliding distance of the progress slider and the progress-adjusting value is linear.

In another embodiment, a progress adjustment performed by the progress slider on a corresponding progress bar in the multilevel progress bar comprises a smooth adjustment or a discrete adjustment.

In another embodiment, the multilevel progress bar includes: a multilevel annular progress bar, a multilevel rectangular progress bar or a multilevel triangular progress bar.

The present embodiment may have the following advantageous effects: the multilevel progress bar includes at least two levels of progress bars, and each level of progress bar corresponds to a different progress-adjusting function; thereby, a user may select different levels of progress bars to adjust the progress as desired so as to enable a fine adjustment of the progress; thus, the present embodiment may solve the problem in the related arts that positioning of the play progress is inaccurate, and that an inadvertent operation or inaccurate positioning may often occur when a user operates a progress bar with his or her finger; consequently, the present embodiment provides a larger, longer or wider space for a user to operate such that the user may quickly perform adjusting operation of the play progress, thereby saving power consumption of the battery and prolonging running time of the terminals.

The Seventh Embodiment

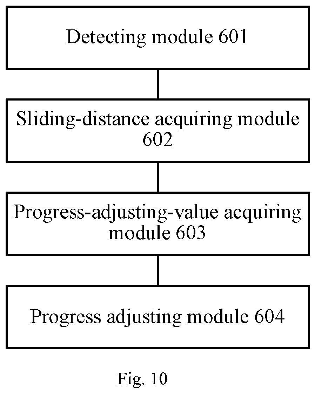

Referring to Fig.10, a device for controlling a progress via a multilevel progress bar is provided by the embodiments of the present disclosure, including: a detecting module 601, a sliding-distance acquiring module 602, a progress-adjusting-value acquiring module 603 and a progress adjusting module 604.

The detecting module 601 is configured to detect a trigger signal acting upon the multilevel progress bar. The multilevel progress bar includes at least two levels of progress bars, each of which includes at least a progress slider thereon, the progress slider being configured to adjust a progress of a corresponding progress bar; respective levels of the progress bars correspond to different progress-adjusting functions; each of the progress-adjusting functions is a function representing a relation between a sliding distance of the progress slider and a progress-adjusting value; and the levels of the progress bars move coordinately based on respective progress-adjusting values and corresponding progress-adjusting functions; and the trigger signal including at least information on the triggered progress bar and a sliding trajectory of the progress slider of the progress bar.

The sliding-distance acquiring module 602 is configured to, if a trigger signal upon any progress bar of the multilevel progress bar is detected, calculate a sliding distance of the progress slider of the triggered progress bar according to the sliding trajectory in the trigger signal.

The progrcss-adjusting-valuc acquiring module 603 is configured to calculate a progress-adjusting value according to a progress-adjusting function of the triggered progress bar and the sliding distance of the progress slider.

The progress adjusting module 604 is configured to control the progress according to the progress-adjusting value.

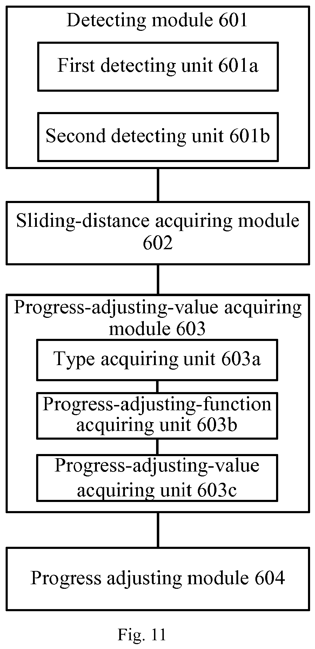

In another embodiment, referring to Fig.11, the detecting module 601 includes:

a first detecting unit 601a configured to detect a trigger signal acting upon a progress slider of each level of the progress bar; or

a second detecting unit 601b configured to detect the trigger signal acting upon any position on each level of the progress bar.

In another embodiment, referring to Fig.11, the progress-adjusting-value acquiring module 603 includes:

a type acquiring unit 603a configured to determine a type of the multilevel progress bar;

a progress-adjusting-function acquiring unit 603b configured to acquire the progress-adjusting function of each level of progress bar according to the type of the multilevel progress bar; and

a progress-adjusting-value acquiring unit 603c configured to calculate a progress-adjusting value according to the progress-adjusting function of the triggered progress bar and the sliding distance of the progress slider.

In another embodiment, the relation between the sliding distance of the progress slider and the progress-adjusting value is linear.

In another embodiment, a progress adjustment performed by the progress slider on a corresponding progress bar in the multilevel progress bar includes a smooth adjustment or a discrete adjustment.

In another embodiment, the multilevel progress bar includes: a multilevel annular progress bar, a multilevel rectangular progress bar or a multilevel triangular progress bar.

The present embodiment may have the following advantageous effects: the multilevel progress bar includes at least two levels of progress bars, and each level of progress bar corresponds to a different progress-adjusting function; thereby, a user may select different levels of progress bars to adjust the progress as desired so as to enable a fine adjustment of the progress; thus, the present embodiment may solve the problem in the related arts that positioning of the play progress is inaccurate, and that an inadvertent operation or inaccurate positioning may often occur when a user operates a progress bar with his or her finger; consequently, the present embodiment provides a larger, longer or wider space for a user to operate such that the user may quickly perform adjusting operation of the play progress, thereby saving power consumption of the battery and prolonging running time of the terminals.

It should be noted that, the device for progress control and the device for controlling a progress via a multilevel progress bar provided by the above embodiments are only illustrated by example of divided functional modules as the above-mentioned. While in practical application, the above functions may be assigned to different modules as desired. That is, the internal structure of the device may be divided into different functional modules, so as to achieve all or part of the functions described above.

In addition, the device for progress control and the device for controlling a progress via a multilevel progress bar provided by the above-described embodiments respectively belong to the same conception with the method for progress control and the method for controlling a progress via a multilevel progress bar, and thus, for the detailed implementing processes of the devices, refer to those of the embodiments of the methods, and the detailed description of which is not repeated herein.

The sequence numbers of the above disclosed embodiments is only for description purpose, but do not represent any preference of those embodiments.

It should be understood by those skilled in the art that, all or part of the steps of the above embodiments may be implemented through hardware, or through a program that instructs a related hardware. The program may be stored on a computer-readable storage medium which may be a read-only memory, a magnetic disk or an optical disk.

**Claims**

1. A method for coordinated control of a multilevel progress bar to control the progress of playback of a video file, the method comprising:

detecting (101, 302) a trigger signal acting upon the multilevel progress bar; wherein:

the multilevel progress bar is a closed multilevel progress bar, having a loop structure in which there is no starting point and finishing point, and comprises at least two levels of progress bars in the form of an outer and an inner progress bar, each of which is a closed progress bar and comprises at least a progress slider thereon, the progress slider being configured to adjust a progress of a corresponding progress bar, and wherein a complete circuit of the outer progress bar corresponds to a progress equal to a total progress of the video file and a complete circuit of the inner progress bar corresponds to a progress less than a total progress of the video file;
respective levels of the progress bars correspond to different progress-adjusting functions;
each of the progress-adjusting functions is a function representing a relation between a sliding distance of the progress slider and a progress-adjusting value;
the levels of the progress bars move coordinately based on respective progress-adjusting values and corresponding progress-adjusting functions; and
the trigger signal comprises at least information on the triggered progress bar and a sliding trajectory of the progress slider of the triggered progress bar;

the method further comprising:

if a trigger signal upon any progress bar of the multilevel progress bar is detected, calculating (102, 303) a sliding distance of the progress slider of the triggered progress bar according to the sliding trajectory in the trigger signal;
calculating (103, 304) a progress-adjusting value according to a progress-adjusting function of the triggered progress bar and the sliding distance of the progress slider;
calculating (104) a sliding distance of a progress slider of another progress bar according to the calculated progress-adjusting value and a progress-adjusting function of the other progress bar;
controlling (105) sliding of the progress slider of the other progress bar according to the sliding distance of the progress slider of the other progress bar; and
performing progress control according to the progress-adjusting value.

2. The method according to claim 1, **characterized in that**, detecting a trigger signal acting upon the multilevel progress bar, comprises:

detecting a trigger signal acting upon a progress slider of each level of progress bar; or
detecting a trigger signal acting upon any position on each level of progress bar.

3. The method according to claim 1, **characterized in that**, calculating a progress-adjusting value according to a progress-adjusting function of the triggered progress bar and the sliding distance of the progress slider, comprises:

determining a type of the multilevel progress bar;
acquiring a progress-adjusting function of each level of progress bar according to the type of the multilevel progress bar; and
calculating the progress-adjusting value according to the progress-adjusting function of the triggered progress bar and the sliding distance of the progress slider.

4. The method according to claim 1, **characterized in that**, the relation between the sliding distance of the progress slider and the progress-adjusting value is linear.

5. The method according to claim 1, **characterized in that**, a progress adjustment performed by the progress slider on a corresponding progress bar in the multilevel progress bar comprises a smooth adjustment or a discrete adjustment.

6. The method according to claim 1, **characterized in that**, the multilevel progress bar comprises a multilevel annular progress bar, a multilevel rectangular progress bar or a multilevel triangular progress bar.

7. A device for coordinated control of a multilevel progress bar to control the progress of playback of a video file, the device comprising:

a detecting module (501) configured to detect a trigger signal acting upon the multilevel progress bar; wherein:

the multilevel progress bar is a closed multilevel progress bar, having a loop structure in which there is no starting point and finishing point, and comprises at least two levels of progress bars, in the form of an outer and an inner progress bar, each of which is a closed progress bar and comprises at least a progress slider thereon, the progress slider being configured to adjust a progress of a corresponding progress bar, and wherein a complete circuit of the outer progress bar corresponds to a progress equal to a total progress of the video file and a complete circuit of the inner progress bar corresponds to a progress less than a total progress of the video file;
respective levels of the progress bars correspond to different progress-adjusting functions;
each of the progress-adjusting functions is a function representing a relation between a sliding distance of the progress slider and a progress-adjusting value;
the levels of the progress bars move coordinately based on respective progress-adjusting values and corresponding progress-adjusting functions;
and the trigger signal comprises at least information on the triggered progress bar and a sliding trajectory of the progress slider of the triggered progress bar;

EP 2 942 779 B1

the device further comprising:

a sliding-distance acquiring module (502) configured to, if a trigger signal upon any progress bar of the multilevel progress bar is detected, calculate a sliding distance of the progress slider of the triggered progress bar according to the sliding trajectory in the trigger signal;

a progress-adjusting-value acquiring module (503) configured to calculate a progress-adjusting value according to a progress-adjusting function of the triggered progress bar and the sliding distance of the progress slider;

the sliding-distance acquiring module (503) being further configured to calculate a sliding distance of a progress slider of another progress bar according to the calculated progress-adjusting value and a progress-adjusting function of the other progress bar;

a coordinated moving module (504) configured to control sliding of the progress slider of the other progress bar according to the sliding distance of the progress slider of the other progress bar; and

a progress adjusting module configured to perform progress control according to the progress-adjusting value.

8. The device according to claim 7, **characterized in that**, the detecting module (501) comprises:

a first detecting unit (501a) configured to detect a trigger signal acting upon a progress slider of each level of the progress bar; or

a second detecting unit (501b) configured to detect a trigger signal acting upon any position on each level of the progress bar.

9. The device according to claim 7, **characterized in that**, the progress-adjusting-value acquiring module (503) comprises:

a type acquiring unit (503a) configured to determine a type of the multilevel progress bar;

a progress-adjusting-function acquiring unit (503b) configured to acquire a progress-adjusting function of each level of progress bar according to the type of the multilevel progress bar; and

a progress-adjusting-value acquiring unit (503c) configured to calculate the progress-adjusting value according to the progress-adjusting function of the triggered progress bar and the sliding distance of the progress slider.

10. The device according to claim 7, **characterized in that**, the relation between the sliding distance of the progress slider and the progress-adjusting value is linear.

11. The device according to claim 7, **characterized in that**, a progress adjustment performed by the progress slider on a corresponding progress bar in the multilevel progress bar comprises a smooth adjustment or a discrete adjustment.

12. The device according to claim 7, **characterized in that**, the multilevel progress bar comprises a multilevel annular progress bar, a multilevel rectangular progress bar or a multilevel triangular progress bar.

13. A computer program, which when executed on a processor of a computer, causes it to perform the method according to any one of claims 1 to 6.

14. A computer readable medium containing programming instructions that when executed cause a computer to perform the steps of a method according to any one of claims 1 to 6.

**Patentansprüche**

1. Verfahren zur koordinierten Steuerung eines Multilevel-Fortschrittsbalkens zum Steuern des Fortschritts der Wiedergabe einer Videodatei, wobei das Verfahren Folgendes beinhaltet:

Erkennen (101, 302) eines Triggersignals, das auf den Multilevel-Fortschrittsbalken wirkt; wobei:

der Multilevel-Fortschrittsbalken ein geschlossener Multilevel-Fortschrittsbalken mit einer Schleifenstruktur ist, in der es keinen Startpunkt und keinen Endpunkt gibt, und mindestens zwei Fortschrittsbalkenlevels in

14

Form eines äußeren und eines inneren Fortschrittsbalkens aufweist, von denen jeder ein geschlossener Fortschrittsbalken ist und mindestens einen Fortschrittsschieber darauf aufweist, wobei der Fortschrittsschieber zum Justieren eines Fortschritts eines entsprechenden Fortschrittsbalkens konfiguriert ist und wobei ein vollständiger Umlauf des äußeren Fortschrittsbalkens einem Fortschritt entspricht, der gleich einem Gesamtfortschritt der Videodatei ist, und ein vollständiger Umlauf des inneren Fortschrittsbalkens einem Fortschritt entspricht, der geringer als ein Gesamtfortschritt der Videodatei ist;

jeweilige Levels der Fortschrittsbalken verschiedenen Fortschrittsjustierfunktionen entsprechen;

jede der Fortschrittsjustierfunktionen eine Funktion ist, die eine Beziehung zwischen einer Verschiebungsdistanz des Fortschrittsschiebers und einem Fortschrittsjustierwert repräsentiert;

die Levels der Fortschrittsbalken sich auf der Basis von jeweiligen Fortschrittsjustierwerten und entsprechenden Fortschrittsjustierfunktionen koordiniert bewegen; und

das Triggersignal mindestens Informationen über den getriggerten Fortschrittsbalken und eine Verschiebungsbahn des Fortschrittsschiebers des getriggerten Fortschrittsbalkens umfasst;

wobei das Verfahren ferner Folgendes beinhaltet:

Berechnen (102, 303), wenn ein Triggersignal auf einem Fortschrittsbalken des Multilevel-Fortschrittsbalkens detektiert wird, einer Verschiebungsdistanz des Fortschrittsschiebers des getriggerten Fortschrittsbalkens gemäß der Verschiebungsbahn in dem Triggersignal;

Berechnen (103, 304) eines Fortschrittsjustierwertes gemäß einer Fortschrittsjustierfunktion des getriggerten Fortschrittsbalkens und der Verschiebungsdistanz des Fortschrittsschiebers;

Berechnen (104) einer Verschiebungsdistanz eines Fortschrittsschiebers eines anderen Fortschrittsbalkens gemäß dem berechneten Fortschrittsjustierwert und einer Fortschrittsjustierfunktion des anderen Fortschrittsbalkens;

Steuern (105) der Verschiebung des Fortschrittsschiebers des anderen Fortschrittsbalkens gemäß der Verschiebungsdistanz des Fortschrittsschiebers des anderen Fortschrittsbalkens; und

Durchführen einer Fortschrittssteuerung gemäß dem Fortschrittsjustierwert.

2. Verfahren nach Anspruch 1, **dadurch gekennzeichnet, dass** das Erkennen eines auf den Multilevel-Fortschrittsbalken wirkenden Triggersignals Folgendes beinhaltet:

Erkennen eines Triggersignals, das auf einen Fortschrittsschieber jedes Fortschrittsbalkenlevels wirkt; oder

Erkennen eines Triggersignals, das auf eine Position auf jedem Fortschrittsbalkenlevel wirkt.

3. Verfahren nach Anspruch 1, **dadurch gekennzeichnet, dass** das Berechnen eines Fortschrittsjustierwertes gemäß einer Fortschrittsjustierfunktion des getriggerten Fortschrittsbalkens und der Verschiebungsdistanz des Fortschrittsschiebers Folgendes beinhaltet:

Bestimmen eines Typs des Multilevel-Fortschrittsbalkens;

Erfassen einer Fortschrittsjustierfunktion jedes Fortschrittsbalkenlevels gemäß dem Typ des Multilevel-Fortschrittsbalkens; und

Berechnen des Fortschrittsjustierwerts gemäß der Fortschrittsjustierfunktion des getriggerten Fortschrittsbalkens und der Verschiebungsdistanz des Fortschrittsschiebers.

4. Verfahren nach Anspruch 1, **dadurch gekennzeichnet, dass** die Beziehung zwischen der Verschiebungsdistanz des Fortschrittsschiebers und dem Fortschrittsjustierwert linear ist.

5. Verfahren nach Anspruch 1, **dadurch gekennzeichnet, dass** eine vom Fortschrittsschieber auf einem entsprechenden Fortschrittsbalken in dem Multilevel-Fortschrittsbalken durchgeführte Fortschrittsjustierung eine sanfte Justierung oder eine diskrete Justierung umfasst.

6. Verfahren nach Anspruch 1, **dadurch gekennzeichnet, dass** der Multilevel-Fortschrittsbalken einen ringförmigen Multilevel-Fortschrittsbalken, einen rechteckigen Multilevel-Fortschrittsbalken oder einen dreieckigen Multilevel-Fortschrittsbalken umfasst.

7. Vorrichtung zum koordinierten Steuern eines Multilevel-Fortschrittsbalkens, um den Fortschritt der Wiedergabe einer Videodatei zu steuern, wobei die Vorrichtung Folgendes umfasst:

ein Erkennungsmodul (501), das zum Erkennen eines auf den Multilevel-Fortschrittsbalken wirkenden Triggersignals konfiguriert ist; wobei:

der Multilevel-Fortschrittsbalken ein geschlossener Multilevel-Fortschrittsbalken mit einer Schleifenstruktur ist, in der es keinen Startpunkt und keinen Endpunkt gibt, und mindestens zwei Fortschrittsbalkenlevels in Form eines äußeren und eines inneren Fortschrittsbalkens umfasst, von denen jeder ein geschlossener Fortschrittsbalken ist und mindestens einen Fortschrittsschieber darauf umfasst, wobei der Fortschrittsschieber zum Justieren eines Fortschritts eines entsprechenden Fortschrittsbalkens konfiguriert ist, und wobei ein vollständiger Umlauf des äußeren Fortschrittsbalkens einem Fortschritt entspricht, der gleich einem Gesamtfortschritt der Videodatei ist, und ein vollständiger Umlauf des inneren Fortschrittsbalkens einem Fortschritt entspricht, der geringer als ein Gesamtfortschritt der Videodatei ist;
jeweilige Levels der Fortschrittsbalken verschiedenen Fortschrittsjustierfunktionen entsprechen;
jede der Fortschrittsjustierfunktionen eine Funktion ist, die eine Beziehung zwischen einer Verschiebungsdistanz des Fortschrittsschiebers und einem Fortschrittsjustierwert repräsentiert;
die Levels der Fortschrittsbalken sich auf der Basis von jeweiligen Fortschrittsjustierwerten und entsprechenden Fortschrittsjustierfunktionen koordiniert bewegen;
und das Triggersignal zumindest Informationen über den getriggerten Fortschrittsbalken und eine Verschiebungsbahn des Fortschrittsschiebers des getriggerten Fortschrittsbalkens umfasst;

wobei die Vorrichtung ferner Folgendes umfasst:

ein Verschiebungsdistanzerfassungsmodul (502), konfiguriert zum Berechnen, wenn ein Triggersignal auf einem Fortschrittsbalken des Multilevel-Fortschrittsbalkens erkannt wird, einer Verschiebungsdistanz des Fortschrittsschiebers des getriggerten Fortschrittsbalkens gemäß der Verschiebungsbahn in dem Triggersignal;
ein Fortschrittsjustierwert-Erfassungsmodul (503), konfiguriert zum Berechnen eines Fortschrittsjustierwertes gemäß einer Fortschrittsjustierfunktion des getriggerten Fortschrittsbalkens und der Verschiebungsdistanz des Fortschrittsschiebers;
wobei das Verschiebungsdistanzerfassungsmodul (503) ferner zum Berechnen einer Verschiebungsdistanz eines Fortschrittsschiebers eines anderen Fortschrittsbalkens gemäß dem berechneten Fortschrittsjustierwert und einer Fortschrittsjustierfunktion des anderen Fortschrittsbalkens konfiguriert ist;
ein koordiniertes Bewegungsmodul (504), konfiguriert zum Steuern der Verschiebung des Fortschrittsschiebers des anderen Fortschrittsbalkens gemäß der Verschiebungsdistanz des Fortschrittsschiebers des anderen Fortschrittsbalkens; und
ein Fortschrittsjustiermodul, konfiguriert zum Durchführen einer Fortschrittssteuerung gemäß dem Fortschrittsjustierwert.

8. Vorrichtung nach Anspruch 7, **dadurch gekennzeichnet, dass** das Erkennungsmodul (501) Folgendes umfasst:

eine erste Erkennungseinheit (501a), konfiguriert zum Erkennen eines Triggersignals, das auf einen Fortschrittsschieber jedes Levels des Fortschrittsbalkens wirkt; oder
eine zweite Erkennungseinheit (501b), konfiguriert zum Erkennen eines Triggersignals, das auf eine Position auf jedem Level des Fortschrittsbalkens wirkt.

9. Vorrichtung nach Anspruch 7, **dadurch gekennzeichnet, dass** das Fortschrittsjustierwert-Erfassungsmodul (503) Folgendes umfasst:

eine Typenerfassungseinheit (503a), konfiguriert zum Bestimmen eines Typs des Multilevel-Fortschrittsbalkens;
eine Fortschrittsjustierfunktions-Erfassungseinheit (503b), konfiguriert zum Erfassen einer Fortschrittsjustierfunktion jedes Fortschrittsbalkenlevels gemäß dem Typ des Multilevel-Fortschrittsbalkens; und
eine Fortschrittsjustierwert-Erfassungseinheit (503c), konfiguriert zum Berechnen des Fortschrittsjustierwertes gemäß der Fortschrittsjustierfunktion des getriggerten Fortschrittsbalkens und der Verschiebungsdistanz des Fortschrittsschiebers.

10. Vorrichtung nach Anspruch 7, **dadurch gekennzeichnet, dass** die Beziehung zwischen der Verschiebungsdistanz des Fortschrittsschiebers und dem Fortschrittsjustierwert linear ist.

11. Vorrichtung nach Anspruch 7, **dadurch gekennzeichnet, dass** eine vom Fortschrittsschieber auf einem entsprechenden Fortschrittsbalken in dem Multilevel-Fortschrittsbalken durchgeführte Fortschrittsjustierung eine sanfte Justierung oder eine diskrete Justierung umfasst.

**12.** Vorrichtung nach Anspruch 7, **dadurch gekennzeichnet, dass** der Multilevel-Fortschrittsbalken einen ringförmigen Multilevel-Fortschrittsbalken, einen rechteckigen Multilevel-Fortschrittsbalken oder einen dreieckigen Multilevel-Fortschrittsbalken umfasst.

**13.** Computerprogramm, das bei Ausführung auf einem Prozessor eines Computers bewirkt, dass es das Verfahren nach einem der Ansprüche 1 bis 6 durchführt.

**14.** Computerlesbares Medium, das Programmierbefehle enthält, die bei Ausführung bewirken, dass ein Computer die Schritte eines Verfahrens nach einem der Ansprüche 1 bis 6 ausführt.

**Revendications**

**1.** Procédé de commande coordonnée d'une barre de progression multiniveaux pour commander la progression de lecture d'un fichier vidéo, le procédé comprenant :

la détection (101, 302) d'un signal de déclenchement agissant sur la barre de progression multiniveaux ; dans lequel :

la barre de progression multiniveaux est une barre de progression multiniveaux fermée, ayant une structure de boucle sans point de départ et point d'arrivée, et comprenant au moins deux niveaux de barres de progression sous la forme d'une barre de progression externe et d'une barre de progression interne, chacune étant une barre de progression fermée et comprenant au moins un curseur de progression sur celle-ci, le curseur de progression étant configuré pour ajuster une progression d'une barre de progression correspondante, et dans lequel un circuit complet de la barre de progression externe correspond à une progression égale à une progression totale du fichier vidéo et un circuit complet de la barre de progression interne correspond à une progression inférieure à une progression totale du fichier vidéo ;
des niveaux respectifs des barres de progression correspondent à différentes fonctions d'ajustement de progression ;
chacune des fonctions d'ajustement de progression est une fonction représentant une relation entre une distance de glissement du curseur de progression et une valeur d'ajustement de progression ;
les niveaux des barres de progression se déplacent de manière coordonnée conformément à des valeurs d'ajustement de progression respectives et des fonctions d'ajustement de progression correspondantes ; et
le signal de déclenchement comprend au moins des informations sur la barre de progression déclenchée et une trajectoire de glissement du curseur de progression de la barre de progression déclenchée ;

le procédé comprenant en outre :

si un signal de déclenchement sur une barre de progression quelconque de la barre de progression multiniveaux est détecté, le calcul (102, 303) d'une distance de glissement du curseur de progression de la barre de progression déclenchée conformément à la trajectoire de glissement dans le signal de déclenchement ;
le calcul (103, 304) d'une valeur d'ajustement de progression conformément à une fonction d'ajustement de progression de la barre de progression déclenchée et de la distance de glissement du curseur de progression ;
le calcul (104) d'une distance de glissement d'un curseur de progression d'une autre barre de progression conformément à la valeur d'ajustement de progression calculée et à une fonction d'ajustement de progression de l'autre barre de progression ;
la commande (105) du glissement du curseur de progression de l'autre barre de progression conformément à la distance de glissement du curseur de progression de l'autre barre de progression ; et
la réalisation d'une commande de progression conformément à la valeur d'ajustement de progression.

**2.** Procédé selon la revendication 1, **caractérisé en ce que** la détection d'un signal de déclenchement agissant sur la barre de progression multiniveaux comprend :

la détection d'un signal de déclenchement agissant sur un curseur de progression de chaque niveau de barre de progression ; ou
la détection d'un signal de déclenchement agissant sur n'importe quelle position à chaque niveau de la barre de progression.

3. Procédé selon la revendication 1, **caractérisé en ce que** le calcul d'une valeur d'ajustement de progression conformément à une fonction d'ajustement de progression de la barre de progression déclenchée et à la distance de glissement du curseur de progression comprend :

la détermination d'un type de la barre de progression multiniveaux ;
l'acquisition d'une fonction d'ajustement de progression de chaque niveau de barre de progression conformément au type de la barre de progression multiniveaux ; et
le calcul de la valeur d'ajustement de progression conformément à la fonction d'ajustement de progression de la barre de progression déclenchée et à la distance de glissement du curseur de progression.

4. Procédé selon la revendication 1, **caractérisé en ce que** la relation entre la distance de glissement du curseur de progression et la valeur d'ajustement de progression est linéaire.

5. Procédé selon la revendication 1, **caractérisé en ce qu'**un ajustement de progression réalisé par le curseur de progression sur une barre de progression correspondante dans la barre de progression multiniveaux comprend un ajustement régulier ou un ajustement discret.

6. Procédé selon la revendication 1, **caractérisé en ce que** la barre de progression multiniveaux comprend une barre de progression annulaire multiniveaux, une barre de progression rectangulaire multiniveaux ou une barre de progression triangulaire multiniveaux.

7. Dispositif de commande coordonnée d'une barre de progression multiniveaux pour commander la progression de lecture d'un fichier vidéo, le dispositif comprenant :

un module de détection (501) configuré pour détecter un signal de déclenchement agissant sur la barre de progression multiniveaux ; dans lequel :

la barre de progression multiniveaux est une barre de progression multiniveaux fermée, ayant une structure de boucle sans point de départ et point d'arrivée, et comprenant au moins deux niveaux de barres de progression sous la forme d'une barre de progression externe et d'une barre de progression interne, chacune étant une barre de progression fermée et comprenant au moins un curseur de progression sur celle-ci, le curseur de progression étant configuré pour ajuster une progression d'une barre de progression correspondante, et dans lequel un circuit complet de la barre de progression externe correspond à une progression égale à une progression totale du fichier vidéo et un circuit complet de la barre de progression interne correspond à une progression inférieure à une progression totale du fichier vidéo ;
des niveaux respectifs des barres de progression correspondent à différentes fonctions d'ajustement de progression ;
chacune des fonctions d'ajustement de progression est une fonction représentant une relation entre une distance de glissement du curseur de progression et une valeur d'ajustement de progression ;
les niveaux des barres de progression se déplacent de manière coordonnée conformément à des valeurs d'ajustement de progression respectives et des fonctions d'ajustement de progression correspondantes ; et
le signal de déclenchement comprend au moins des informations sur la barre de progression déclenchée et une trajectoire de glissement du curseur de progression de la barre de progression déclenchée ;

le dispositif comprenant en outre:

un module d'acquisition de distance de glissement (502) configuré pour, si un signal de déclenchement sur une barre de progression de la barre de progression multiniveaux est détecté, calculer une distance de glissement du curseur de progression de la barre de progression déclenchée conformément à la trajectoire de glissement dans le signal de déclenchement ;
un module d'acquisition de valeur d'ajustement de progression (503) configuré pour calculer une valeur d'ajustement de progression conformément à une fonction d'ajustement de progression de la barre de progression déclenchée et à la distance de glissement du curseur de progression ;

le module d'acquisition de distance de glissement (503) étant en outre configuré pour calculer la distance de glissement d'un curseur de progression d'une autre barre de progression conformément à la valeur d'ajustement de progression calculée et à une fonction d'ajustement de progression de l'autre barre de progression ;

un module de déplacement coordonné (504) configuré pour commander le glissement du curseur de progression de l'autre barre de progression conformément à la distance de glissement du curseur de progression de l'autre barre de progression ; et

un module d'ajustement de progression configuré pour réaliser une commande de progression conformément à la valeur d'ajustement de progression.

**8.** Dispositif selon la revendication 7, **caractérisé en ce que** le module de détection (501) comprend :

une première unité de détection (501a) configurée pour détecter un signal de déclenchement agissant sur un curseur de progression de chaque niveau de la barre de progression ; ou

une seconde unité de détection (501b) configurée pour détecter un signal de déclenchement agissant sur n'importe quelle position à chaque niveau de la barre de progression.

**9.** Dispositif selon la revendication 7, **caractérisé en ce que** le module d'acquisition de valeur d'ajustement de progression (503) comprend :

une unité d'acquisition de type (503a) configurée pour déterminer un type de la barre de progression multiniveaux ;

une unité d'acquisition de fonction d'ajustement de progression (503b) configurée pour acquérir une fonction d'ajustement de progression de chaque niveau de barre de progression conformément au type de la barre de progression multiniveaux ; et

une unité d'acquisition de valeur d'ajustement de progression (503c) configurée pour calculer la valeur d'ajustement de progression conformément à la fonction d'ajustement de progression de la barre de progression déclenchée et à la distance de glissement du curseur de progression.

**10.** Dispositif selon la revendication 7, **caractérisé en ce que** la relation entre la distance de glissement du curseur de progression et la valeur d'ajustement de progression est linéaire.

**11.** Dispositif selon la revendication 7, **caractérisé en ce qu'**un ajustement de progression réalisé par le curseur de progression sur une barre de progression correspondante dans la barre de progression multiniveaux comprend un ajustement uniforme ou un ajustement discret.

**12.** Dispositif selon la revendication 7, **caractérisé en ce que** la barre de progression multiniveaux comprend une barre de progression annulaire multiniveaux, une barre de progression rectangulaire multiniveaux ou une barre de progression triangulaire multiniveaux.

**13.** Programme d'ordinateur qui, à son exécution sur un processeur d'un ordinateur, amène ce dernier à réaliser le procédé selon l'une quelconque des revendications 1 à 6.

**14.** Support lisible par ordinateur contenant des instructions de programmation qui, à leur exécution, amènent un ordinateur à réaliser les étapes d'un procédé selon l'une quelconque des revendications 1 à 6.

Fig. 1

Fig. 2

Fig. 3

~ 101

Detect a trigger signal that acts on multi-level progress bars, where the multi-level progress bars at least comprise two levels of progress bars, each level of progress bar at least comprises one progress slider, the progress slider is used for performing progress adjustment on a corresponding progress bar, each level of progress bar corresponds to a different progress adjustment function, the progress adjustment function is a function between a sliding distance of a progress of a progress slider and a progress adjustment value, the levels of progress bars are linked based on the progress adjustment value and corresponding progress adjustment functions, the trigger signal at least comprises information of a triggered progress bar and a sliding trajectory of the progress slider of the progress bar

↓

~ 102

If a trigger signal on any progress bar in the multi-level progress bars is detected, calculate a sliding distance of a progress slider of the triggered progress bar according to a sliding trajectory in the trigger signal

↓

~ 103

Calculate a progress adjustment value according to a progress adjustment function of the triggered progress bar and the sliding distance of the progress slider

↓

~ 104

Calculate a sliding distance of a progress slider of the other progress bar according to the progress adjustment value obtained through calculation and a progress adjustment function of another progress bar

↓

~ 105

Control the progress slider of the corresponding progress bar to slide according to the sliding distance of the progress slider of the other progress bar

Fig. 4

201

Detect a trigger signal acting upon a multilevel progress bar. The multilevel progress bar includes at least two levels of progress bars, each of which includes at least a progress slider thereon, the progress slider being configured to adjust a progress of a corresponding progress bar; respective levels of the progress bars correspond to different progress-adjusting functions; each of the progress-adjusting functions is a function representing a relation between a sliding distance of the progress slider and a progress-adjusting value; and the levels of the progress bars move coordinatedly based on respective progress-adjusting values and corresponding progress-adjusting functions; and the trigger signal including at least information on the triggered progress bar and a sliding trajectory of the progress slider of the triggered progress bar

202

If a trigger signal upon any progress bar of the multilevel progress bar is detected, calculate a sliding distance of the progress slider of the triggered progress bar according to the sliding trajectory in the trigger signal

203

Calculate a progress-adjusting value according to the progress-adjusting function of the triggered progress bar and the sliding distance of the progress slider

204

Perform progress control according to the progress-adjusting value

Fig. 5

301

When a preset operation of an application is triggered, display a multilevel progress bar of the application software

302

Detect a trigger signal acting upon the multilevel progress bar

303

If a trigger signal upon any progress bar of the multilevel progress bar is detected, calculate a sliding distance of the progress slider of the triggered progress bar according to the sliding trajectory in the trigger signal

304

Calculate a progress-adjusting value according to the progress-adjusting function of the triggered progress bar and the sliding distance of the progress slider

305

Calculate a sliding distance of a progress slider of an other progress bar according to the calculated progress-adjusting value and a progress-adjusting function of the other progress bar; and control sliding of the progress slider of corresponding progress bar according to the sliding distance of the progress slider of the other progress bar

306

Perform progress control according to the progress-adjusting value

Fig. 6

```
                                                    ┌─ 401
┌──────────────────────────────────────────────────┐
│                                                    │
│   Detect a trigger signal acting upon the multilevel progress │
│                        bar                         │
│                                                    │
└──────────────────────────────────────────────────┘
                          │
                          ▼                          ┌─ 402
┌──────────────────────────────────────────────────┐
│   If a trigger signal upon any progress bar of the multilevel │
│   progress bar is detected, calculate a sliding distance of the │
│   progress slider of the triggered progress bar according to the │
│        sliding trajectory in the trigger signal    │
└──────────────────────────────────────────────────┘
                          │                          ┌─ 403
                          ▼
┌──────────────────────────────────────────────────┐
│   Calculate a progress-adjusting value according to the sliding │
│    distance of the progress slider of the triggered progress bar │
│      and the corresponding progress-adjusting function │
└──────────────────────────────────────────────────┘
                          │                          ┌─ 404
                          ▼
┌──────────────────────────────────────────────────┐
│                                                    │
│     Perform progress control according to the progress-         │
│                     adjusting value                │
│                                                    │
└──────────────────────────────────────────────────┘
                          │                          ┌─ 405
                          ▼
┌──────────────────────────────────────────────────┐
│                                                    │
│   Display the application software according to the adjusted │
│                        progress                    │
│                                                    │
└──────────────────────────────────────────────────┘
```

Fig. 7

Detecting module 501

Sliding-distance acquiring module 502

Progress-adjusting-value acquiring module 503

Coordinated moving module 504

Fig. 8

**Detecting module 501**

First detecting unit 501a

Second detecting unit 501b

**Sliding-distance acquiring module 502**

**Progress-adjusting-value acquiring module 503**

Type acquiring unit 503a

Progress-adjusting-function acquiring unit 503b

Progress-adjusting-value acquiring unit 503c

**Coordinated moving module 504**

Fig. 9

Fig. 10

Detecting module 601

First detecting unit 601a

Second detecting unit 601b

Sliding-distance acquiring module 602

Progress-adjusting-value acquiring module 603

Type acquiring unit 603a

Progress-adjusting-function acquiring unit 603b

Progress-adjusting-value acquiring unit 603c

Progress adjusting module 604

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008186808 A
- US 2007250772 A

- EP 2378402 A